# EUROPÄISCHE PATENTSCHRIFT

(11) **EP 1 495 891 B1**
(45) Veröffentlichungstag und Bekanntmachung des Hinweises auf die Patenterteilung: **10.06.2009**
(21) Anmeldenummer: 04015581.4
(22) Anmeldetag: 02.07.2004
(51) Int. Cl.: B60J 7/04, B60J 7/043, B29C 44/58

(54) **Deckel für eine Öffnung in einer Dachfläche eines Fahrzeugs sowie Verfahren für dessen Herstellung**
Panel for a vehicle roof opening and corresponding production method
Paneau pour toit ouvrant de véhicule et méthode de production correspondante

(30) Priorität: 10.07.2003 DE 10331270
(43) Veröffentlichungstag der Anmeldung: 12.01.2005
(73) Patentinhaber: Webasto AG, 82131 Stockdorf (DE)
(72) Erfinder: Bott, Guido, 80997 München (DE); Schröferl, Thomas, 82069 Hohenschäftlan (DE); Wallisch, Michael, 90455 Nürnberg (DE); Stangl, Karl, 86919 Utting (DE)

(56) Entgegenhaltungen:
- EP-A- 1 026 022
- DE-A- 19 744 385
- DE-C- 4 308 215
- FR-A- 2 814 705
- GB-A- 2 147 244

## Beschreibung

Die vorliegende Erfindung betrifft einen Deckel für eine Öffnung in einer Dachfläche eines Fahrzeugs gemäß dem Oberbegriff von Anspruch 1 sowie ein entsprechendes Herstellungsverfahren gemäß dem Oberbegriff von Anspruch 15.

Glasdeckel für Fahrzeugdächer, bei denen die Glasscheibe in ihrem Umfangsrandbereich umschäumt ist, sind seit langem bekannt. Beispiele für gattungsgemäße Deckel sind in der DE 37 42 719 A1, DE 43 08 215 C1, DE 35 06 009 A1, DE 100 36 630 C1, DE 199 18 150 C1 und der DE 197 44 385 A1 beschrieben. In allen genannten Fällen ist dabei ein sogenanntes Deckelinnenblech, welches zur Verstärkung und Befestigung der Glasscheibe dient, mit eingeschäumt.

Bei der DE 37 42 719 A1 und der DE 100 36 630 C1 weist das Deckelinnenblech jeweils eine Auswölbung bzw. Sicke auf, mittels welcher das Deckelinnenblech an der Unterseite der Glasscheibe aufliegt, wobei auf diese Weise das Vordringen der Schäummasse in Richtung auf die Mitte der Glasscheibe hin begrenzt werden kann. Dadurch ragt das Deckelinnenblech zur Scheibenmitte hin über die Umschäumung hinaus. Eine solche Anordnung ist auch in DE 199 18 150 C1 beschrieben.

Bei dem in der DE 43 08 215 C1 beschriebenen Deckel ist zwischen dem Deckelinnenblech und der Scheibenunterseite ein Schaumstoffstreifen eingelegt, um das Vordringen der Schäummasse in Richtung auf die Scheibenmitte hin zu begrenzen. Der gleiche Effekt wird bei dem in der DE 35 06 009 A1 beschriebenen Deckel mittels einer Dichtungsschnur erzielt, welche zwischen dem Deckelinnenblech und der Scheibenunterseite eingelegt ist.

In der DE 197 44 385 A1 ist ein Deckel gezeigt, bei welchem die Umschäumung an dem zur Scheibenmitte hin weisenden Rand eine sehr kleine, nicht näher beschriebene Hinterschneidung aufweist.

Beim Bruch der Glasscheibe eines Glasdeckels bildet sich im Regelfall an dem zur Deckelmitte hin weisenden Rand der Umschäumung bzw. des Deckelinnenblechs ein Splitterkragen, d.h. eine Ansammlung von Glassplittern, die von dem zur Deckelmitte hin weisenden Rand der Umschäumung bzw. des Deckelinnenblechs nach innen zur Deckelmitte hin abstehen. Dies birgt Gefahren für die Fahrzeuginsassen bzw. im Falle eines Unfalls auch für die Helfer.

In der EP 1 026 022 ist ebenfalls ein Deckel gezeigt, bei dem die Umschäumung an dem zur Scheibenmitte hin weisenden Rand eine Hinterschneidung aufweist.

Es ist Aufgabe der vorliegenden Erfindung, einen Glasdeckel für ein Fahrzeug zu schaffen, bei welchem im Falle eines Bruchs der Glasscheibe eine Gefährdung durch einen von der Umschäumung zur Deckelmitte hin abstehenden Splitterkragen vermeiden werden soll. Ferner soll ein Verfahren zum Herstellen eines solchen Deckels geschaffen werden.

Diese Aufgabe wird erfindungsgemäß gelöst durch einen Deckel gemäß Anspruch 1 sowie ein Verfahren zum Herstellen eines solchen Deckels gemäß Anspruch 15. Bei dieser Lösung ist vorteilhaft, dass dadurch, dass der zur Scheibenmitte hin weisende Rand der Umschäumung mit einer Hinterschneidung zwischen der Unterseite der Scheibe und der Umschäumung versehen ist, die sich mindestens 3 mm, vorzugsweise mindestens 5 mm, in die Umschäumung hinein erstreckt, bei den üblichen Scheibendicken zuverlässig verhindert werden kann, daas im Falle des Bruchs der Scheibe Splitter über den zur Scheibenmitte hin weisenden Rand der Umschäumung zur Deckelmitte hin hinausragen. Statt dessen ragen Splitter, die von der Umschäumung gehalten werden, allenfalls in den Bereich der Hinterschneidung hinein, wo sie von der Umschäumung von unten verdeckt werden, so dass die Verletzungsgefahr stark verringert werden kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine schematische Ansicht eines erfindungsgemäßen Deckels von unten;
- Fig. 2: eine Schnittansicht entlang der Linie II-II von Fig. 1, wobei jedoch der linke Deckelrand in Fig. 2 nicht dargestellt ist; und
- Fig. 3: eine Ansicht wie Fig. 2, wobei eine abgewandelte Ausführungsform in einem Zwischenstadium der Herstellung gezeigt ist.

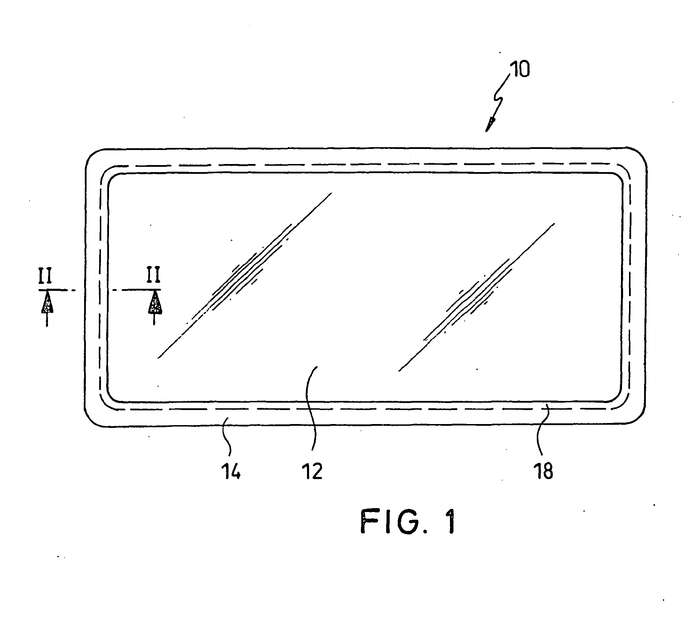

In Fig. 1 ist in schematischer Weise eine Ansicht eines Glasdeckels 10 für eine Öffnung in der Dachfläche eines Fahrzeugs von unten gezeigt. Bei dem Deckel 10 handelt es sich vorzugsweise um einen verstellbaren Deckel eines Schiebedaches, Schiebehebedaches, Ausstelldaches oder außengeführten Schiebedaches. Es kann sich bei dem Deckel 10 jedoch auch um einen karosseriefest montierten Deckel handeln.

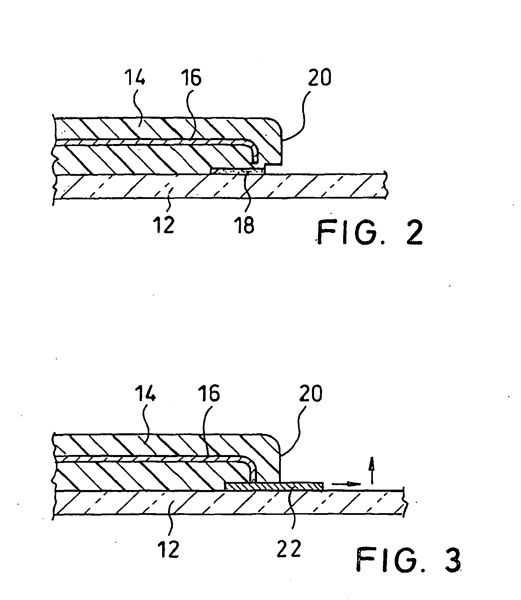

Der Deckel 10 umfasst eine Glasscheibe 12, die in ihrem Umfangsrandbereich an der Unterseite mit einer Umschäumung 14, vorzugsweise aus Polyurethan, versehen ist. In die Umschäumung 14 ist ein Deckelinnenblech 16 eingeschäumt, siehe Fig. 2 (in den Fig. 2 bis 4 ist die Unterseite die Deckels 10 als nach oben weisend dargestellt). Das Deckelinnenblech ist in Fig. 1 nicht dargestellt. Die Umschäumung 14 dient in an sich bekannter Weise als Träger für eine umlaufende Deckelranddichtung (nicht gezeigt), als Träger für das Deckelinnenblech 16 sowie als Verstärkung für den Rand der Glasscheibe 12. Das Deckelinnenblech 16 ist innerhalb der Umschäumung 14 und in Abstand von der Scheibe 12 angeordnet.

Bei der Ausführungsform gemäß Fig. 2 ist in dem zur Deckelmitte bzw. Scheibenmitte hinweisenden Randbereich der Umschäumung 14 (d.h. im innenliegenden Randbereich der Umschäumung 14) die Unterseite der Glasscheibe 12 mit einem Klebestreifen 18 versehen, dessen Oberseite glatt ist, um ein Anhaften der Umschäumung 14 möglichst zu verhindern. Vorzugsweise handelt es sich bei dem Streifen 18 um ein Teflonband. Durch das Vorsehen des Teflonstreifens 18, welcher vor dem Umschäumen der Scheibe 12 auf deren Unterseite angebracht wird, bildet sich beim Umschäumen eine Hinterschneidung in der Umschäumung 14 zwischen der Umschäumung 14 und der Unterseite der Scheibe 12 aus, welche sich von dem zur Scheibenmitte hinweisenden Rand der Umschäumung14 aus in diese hinein erstreckt. Erfindungsgemäß erstreckt sich die Hinterschneidung mindestens 3 mm in die Umschäumung hinein, um im Fall des Bruchs der Scheibe 12 einen über den zur Scheibenmitte hinweisenden Rand 20 der Umschäumung 14 hinausragenden Splitterkragen zu verhindern. Zweckmäßigerweise erstreckt sich die Hinterschneidung maximal 15 mm in die Umschäumung 14 hinein.

Die Unterseite der Scheibe 12 kann im Randbereich mit einer Glasfritte versehen sein, die dann vorzugsweise im Bereich des Klebestreifens 18 mit einer Aussparung versehen ist.

In ähnlicher Weise kann die Unterseite der Scheibe 12 im Randbereich mit einem sogenannten Primer, d.h. einem Haftvermittler zwischen der Scheibenunterseite bzw. der Glasfritte und der Umschäumung14, versehen sein, wobei dann die Scheibenunterseite im Bereich des Klebestreifens 18 Primer-frei ist.

Beim Herstellen des Deckels 10 wird zunächst die Glasscheibe 12 an ihrer Unterseite mit dem Klebestreifen 18 versehen und mit ihrer Unterseite nach oben in ein Schäumwerkzeug eingelegt, in welches ferner das Deckelinnenblech 16 eingelegt wird. Anschließend wird das Werkzeug geschlossen und die Polyurethan-Schäummasse in das Werkzeug eingebracht. Nach dem Aushärten der Umschäumung 14 wird das Werkzeug geöffnet und der Deckel 10 entnommen.

In Fig. 3 ist eine abgewandelte Ausführungsform gezeigt, bei welcher die Hinterschneidung nicht mittels eines Klebestreifens 18, sondern mittels eines Schiebers 22 ausgebildet wird. Der Schieber 22 ist dabei am Oberwerkzeug des Schäumwerkzeugs ausgebildet und kann nach erfolgter Umschäumung in der in Fig. 3 mittels Pfeilen angedeuteten Weise von dem Deckel 10 entfernt werden, um die Hinterschneidung frei zu geben. In diesem Fall liegt die Hinterschneidung 14 dann frei.

Alternativ kann die Hinterschneidung auch ausgebildet werden, indem ein entsprechendes werkzeuggebundenes Element oder eine entsprechende Werkzeugdichtung beim Schäumvorgang verwendet wird (in den Figuren nicht gezeigt).

Bei der Lösung gemäß Fig. 3 ist vorteilhaft, dass hier keine zusätzlichen Elemente für den Deckel 10 selbst verwendet werden, so dass ein eventueller Mehrpreis nur bei den Werkzeugkosten entstehen kann.

Es versteht sich, dass der Schieber 22 so ausgebildet sind, dass sie nicht an der Scheibenunterseite anhaften.

Vorzugsweise sind sowohl die Umschäumung 14 als auch die Hinterschneidung, wie in Fig. 1 gezeigt, umlaufend ausgebildet.

### Bezugszeichenliste

- 10: Glasdeckel
- 12: Glasscheibe
- 14: Umschäumung
- 16: Deckelinnenblech
- 18: Klebestreifen
- 20: innerer Rand von 14
- 22: Schieber

## Patentansprüche

1. Deckel für eine Öffnung in einer Dachfläche eines Fahrzeugs, mit einer Glasscheibe (12), die im Randbereich mindestens über einen Teil des Umfangs mindestens an ihrer Unterseite mit einer Umschäumung (14) versehen ist, wobei am zur Scheibenmitte weisenden Rand (20) der Umschäumung (14) zwischen der Unterseite der Scheibe (12) und der Umschäumung eine Hinterschneidung ausgebildet ist, die sich mindestens 3 mm in die Umschäumung hinein erstreckt, wobei die Umschäumung im Bereich der Hinterschneidung nicht in Verbindung mit der Unterseite der Glasscheibe steht, und wobei die Unterseite der Scheibe (12) und eine der Unterseite der Scheibe (12) zugewandte Oberfläche der Umschäumung (14) über den gesamten Bereich der Hinterschneidung im wesentlichen parallel zueinander verlaufen.

2. Deckel nach Anspruch 1, **dadurch gekennzeichnet, dass** sich die Hinterschneidung maximal 15 mm in die Umschäumung (14) hinein erstreckt.

3. Deckel nach Anspruch 1 oder 2, **dadurch gekennzeichnet, dass** die Hinterschneidung von einem auf der Unterseite der Glasscheibe (12) klebenden Streifen (18) mindestens teilweise ausgefüllt wird.

4. Deckel nach Anspruch 3, **dadurch gekennzeichnet, dass** der Streifen (18) auf seiner der Umschäumung zugewandten Seite mit einer antihaftenden Oberfläche versehen ist.

5. Deckel nach Anspruch 4, **dadurch gekennzeichnet, dass** die antihaftende Oberfläche von einem Teflonstreifen (18) gebildet wird.

6. Deckel nach einem der Ansprüche 3 bis 5, **dadurch gekennzeichnet, dass** die Unterscheibe der Scheibe (12) mit einer Glasfritte versehen ist, welche im Bereich des Streifens (18) mit einer Aussparung versehen ist.

7. Deckel nach einem der vorhergehenden Ansprüche, **dadurch gekennzeichnet, dass** die Unterseite der Scheibe (12) im Bereich der Umschäumung (14) mit einem Primer versehen ist, wobei die Unterseite der Scheibe im Bereich des Streifens (18) Primer-frei ist.

8. Deckel nach einem der vorhergehenden Ansprüche, **dadurch gekennzeichnet, dass** mindestens ein Stützelement (16) in die Umschäumung (18) eingeschäumt ist.

9. Deckel nach Anspruch 8, **dadurch gekennzeichnet, dass** das Stützelement in Abstand von der Scheibe (12) angeordnet ist.

10. Deckel nach Anspruch 8 oder 9, **dadurch gekennzeichnet, dass** das Stützelement als Deckelinnenblech (16) ausgebildet ist.

11. Deckel nach Anspruch 1 oder 2, **dadurch gekennzeichnet, dass** die Hinterschneidung von mindestens einem Einlegeelement (24), welches nicht an der Scheibenunterseite anhaftet, ausgefüllt wird.

12. Deckel nach einem der vorhergehenden Ansprüche, **dadurch gekennzeichnet, dass** die Umschäumung (14) und die Hinterschneidung umlaufend ausgebildet sind.

13. Deckel nach einem der vorhergehenden Ansprüche, **dadurch gekennzeichnet, dass** die Umschäumung (14) aus Polyurethan besteht.

14. Deckel nach Anspruch 1 oder 2, **dadurch gekennzeichnet, dass** die Hinterschneidung freiliegend ist.

15. Verfahren zum Herstellen eines Deckels (10) für eine Öffnung in einer Dachfläche eines Fahrzeugs, wobei eine Glasscheibe (12) in ein Schäumwerkzeug eingelegt wird, das Schäumwerkzeug geschlossen wird, Schäummasse in das Werkzeug eingebracht wird, um im Randbereich der Scheibe mindestens über einen Teil des Umfangs mindestens an der Unterseite der Scheibe eine Umschäumung (14) auszubilden, und der Deckel aus dem Werkzeug entnommen wird, dass beim Umschäumen am zur Scheibenmitte weisenden Rand (20) der Umschäumung (14) zwischen der Unterseite der Scheibe und der Umschäumung eine Hinterschneidung ausgebildet wird, die sich mindestens 3 mm in die Umschäumung hinein erstreckt, wobei die Umschäumung im Bereich der Hinterschneidung nicht in verbindung mit der Unterseite der Glasscheibe steht, und wobei die Unterseite der Scheibe (12) und eine der Unterseite der Scheibe (12) zugewandte Oberfläche der Umschäumung (14) über den gesamten Bereich der Hinterschneidung im wesentlichen parallel zueinander verlaufen.

16. Verfahren nach Anspruch 15, **dadurch gekennzeichnet, dass** vor dem Umschäumen auf der Unterseite der Glasscheibe (12) ein Streifen (18) aufgeklebt wird, welcher nach dem Umschäumen die Hinterschneidung mindestens teilweise ausfüllt.

17. Verfahren nach Anspruch 15, **dadurch gekennzeichnet, dass** die Hinterschneidung mittels mindestens eines werkzeuggebundenen Elements oder mindestens einer Werkzeugdichtung ausgebildet wird.

18. Verfahren nach Anspruch 15, **dadurch gekennzeichnet, dass** die Hinterschneidung mittels mindestens eines am Schäumwerkzeugs ausgebildeten Schiebers (22) ausgebildet wird.

19. Verfahren nach Anspruch 18, **dadurch gekennzeichnet, dass** der Schieber (22) am Oberwerkzeug ausgebildet ist.

## Claims

1. Panel for a vehicle roof opening, with a glass pane (12) at least the lower side of which is provided with a foam cladding (14) at least over part of the periphery of the edge region, wherein an undercut is formed between the lower side of the pane (12) and the foam cladding on that edge (20) of the foam cladding (14) which points towards the centre of the pane, said undercut extending at least 3 mm into the foam cladding, wherein the foam cladding is not connected in the region of the undercut to the lower side of the glass pane, and wherein the lower side of the pane (12) and a surface of the foam cladding (14), which surface faces the lower side of the pane (12), run substantially parallel to each other over the entire region of the undercut.

2. Panel according to Claim 1, **characterized in that** the undercut extends at maximum 15 mm into the foam cladding (14).

3. Panel according to Claim 1 or 2, **characterized in that** the undercut is at least partially filled by a strip (18) adhering to the lower side of the glass pane (12).

4. Panel according to Claim 3, **characterized in that that** side of the strip (18) which faces the foam cladding is provided with a non-stick surface.

5. Panel according to Claim 4, **characterized in that** the non-stick surface is formed by a Teflon strip (18).

6. Panel according to one of Claims 3 to 5, **characterized in that** the lower side of the pane (12) is provided with a glass frit which is provided with a cutout in the region of the strip (18).

7. Panel according to one of the preceding claims, **characterized in that** the lower side of the pane (12) is provided with a primer in the region of the foam cladding (14), with the lower side of the pane being free from primer in the region of the strip (18).

8. Panel according to one of the preceding claims, **characterized in that** at least one supporting element (16) is foamed into the foam cladding (14).

9. Panel according to Claim 8, **characterized in that** the supporting element is arranged at a distance from the pane (12).

10. Panel according to Claim 8 or 9, **characterized in that** the supporting element is designed as an inner sheet (16) of the panel.

11. Panel according to Claim 1 or 2, **characterized in that** the undercut is filled by at least one insert element (24) which does not adhere to the lower side of the pane.

12. Panel according to one of the preceding claims, **characterized in that** the foam cladding (14) and the undercut are of encircling design.

13. Panel according to one of the preceding claims, **characterized in that** the foam cladding (14) is composed of polyurethane.

14. Panel according to Claim 1 or 2, **characterized in that** the undercut is exposed.

15. Method for producing a panel (10) for a vehicle roof opening, wherein a glass pane (12) is inserted into a foaming mould, the foaming mould is closed, foaming compound is introduced into the mould in order to form, at least on the lower side of the pane, a foam cladding (14) at least over part of the periphery of the edge region of the pane, and the cover is removed from the mould, wherein, during the foam cladding operation, an undercut is formed between the lower side of the pane and the foam cladding on that edge (20) of the foam cladding (14) which points towards the centre of the pane, said undercut extending at least 3 mm into the foam cladding, wherein the foam cladding is not connected in the region of the undercut to the lower side of the glass pane, and wherein the lower side of the pane (12) and a surface of the foam cladding (14), which surface faces the lower side of the pane (12), run substantially parallel to each other over the entire region of the undercut.

16. Method according to Claim 15, **characterized in that**, before the foam cladding operation, a strip (18) is stuck on the lower side of the glass pane (12), said strip at least partially filling the undercut after the foam cladding operation.

17. Method according to Claim 15, **characterized in that** the undercut is formed by means of at least one element which is dependent on the mould dimensions or at least one mould seal.

18. Method according to Claim 15, **characterized in that** the undercut is formed by means of at least one slide (22) formed on the foaming mould.

19. Method according to Claim 18, **characterized in that** the slide (22) is formed on the upper mould.

## Revendications

1. Panneau pour une ouverture ménagée dans la surface du toit d'un véhicule, qui présente une vitre (12) dont au moins le côté inférieur de la bordure est doté d'un moussage (14) sur au moins une partie de la périphérie,
une contre-dépouille qui pénètre d'au moins 3 mm dans le moussage étant formée entre le côté inférieur de la vitre (12) et le moussage sur le bord (20) du moussage (14) tourné vers le milieu de la vitre,
le moussage n'étant pas relié à la face inférieure de la vitre dans la zone de la contre-dépouille et
la face inférieure de la vitre (12) et une surface de moussage (14) tournée vers la face inférieure de la vitre (12) s'étendant essentiellement en parallèle l'une à l'autre sur toute la partie occupée par la contre-dépouille.

2. Panneau selon la revendication 1, **caractérisé en ce que** la contre-dépouille pénètre d'au moins 15 mm dans le moussage (14).

3. Panneau selon la revendication 1 ou 2, **caractérisé en ce que** la contre-dépouille est remplie au moins en partie par un ruban (18) qui adhère à la face inférieure de la vitre (12).

4. Panneau selon la revendication 3, **caractérisé en ce que** le ruban (18) est doté d'une surface antiadhésive sur son côté tourné vers le moussage.

5. Panneau selon la revendication 4, **caractérisé en ce que** la surface antiadhésive est formée par un ruban de Teflon (18).

6. Panneau selon l'une des revendications 3 à 5, **caractérisé en ce que** la face inférieure de la vitre (12) est dotée d'un fritté de verre qui présente une découpe dans la zone occupée par le ruban (18).

7. Panneau selon l'une des revendications précédentes, **caractérisé en ce que** la face inférieure de la vitre (12) est dotée d'une couche de fond dans la zone occupée par le moussage (14), la face inférieure de la vitre étant exempte de couche de fond dans la zone occupée par le ruban (18).

8. Panneau selon l'une des revendications précédentes, **caractérisé en ce qu'**au moins un élément de soutien (16) est incorporé dans le moussage (14).

9. Panneau selon la revendication 8, **caractérisé en ce que** l'élément de soutien est disposé à distance de la vitre (12).

10. Panneau selon la revendication 8 ou 9, **caractérisé en ce que** l'élément de soutien est configuré comme tôle intérieure (16) du panneau.

11. Panneau selon la revendication 1 ou 2, **caractérisé en ce que** la contre-dépouille est remplie d'au moins un élément de garniture (24) qui n'adhère pas à la face inférieure de la vitre.

12. Panneau selon l'une des revendications précédentes, **caractérisé en ce que** le moussage (14) et la contre-dépouille sont réalisés sur toute la périphérie.

13. Panneau selon l'une des revendications précédentes, **caractérisé en ce que** le moussage (14) est réalisé en polyuréthane.

14. Panneau selon la revendication 1 ou 2, **caractérisé en ce que** la contre-dépouille est libre.

15. Procédé de fabrication d'un panneau (10) pour une ouverture ménagée dans la surface de toiture d'un véhicule, dans lequel une vitre (12) est placée dans un outil de moussage, l'outil de moussage est fermé, une pâte de moussage est injectée dans l'outil pour former au moins sur la face inférieure de la bordure de la vitre un moussage (14) sur au moins une partie de la périphérie, le panneau étant enlevé ensuite de l'outil, une contre-dépouille qui pénètre d'au moins 3 mm dans le moussage étant formée lors du moussage entre la face inférieure de la vitre et le moussage sur le bord (20) du moussage (14) tourné vers le milieu de la vitre,
le moussage n'étant pas relié à la face inférieure de la vitre dans la zone occupée par la contre-dépouille et
la face inférieure de la vitre (12) et une surface du moussage (14) tournée vers la face inférieure de la vitre (12) s'étendant essentiellement en parallèle l'une à l'autre sur toute la zone occupée par la contre-dépouille.

16. Procédé selon la revendication 15, **caractérisé en ce qu'**avant le moussage, un ruban (18) qui remplit au moins en partie la contre-dépouille après le moussage est collé sur la face inférieure de la vitre (12).

17. Procédé selon la revendication 15, **caractérisé en ce que** la contre-dépouille est formée au moyen d'au moins un élément relié à l'outil ou d'au moins un joint d'étanchéité de l'outil.

18. Procédé selon la revendication 15, **caractérisé en ce que** la contre-dépouille est formée au moyen d'au moins un coulisseau (22) formé sur l'outil de moussage.

19. Procédé selon la revendication 18, **caractérisé en ce que** le coulisseau (22) est formé sur l'outil supérieur.
